# EUROPEAN PATENT APPLICATION

(11) **EP 3 360 506 A1**
(43) Date of publication of application: **15.08.2018**
(21) Application number: 18155931.1
(22) Date of filing: 09.02.2018
(51) Int. Cl.: A61C 7/00, A61C 7/14

(54) **METHOD AND MODEL FOR POSITIONING ORTHODONTIC BRACKETS**

(30) Priority: 09.02.2017 IT 201700014318
(71) Applicant: Scuzzo, Giuseppe, 00122 Ostia Lido RM (IT); Scuzzo, Giacomo, 00124 Rome (IT); Calavritinos, Nicolas, 00052 Cerveteri RM (IT)
(72) Inventor: Scuzzo, Giuseppe, 00122 Ostia Lido RM (IT); Scuzzo, Giacomo, 00124 Rome (IT); Calavritinos, Nicolas, 00052 Cerveteri RM (IT)
(74) Representative: Papa, Elisabetta

(57) **Abstract**

Orthodontic modeling method to allow the positioning of orthodontic brackets based on the use of a plurality of transfer elements, which comprises the steps of providing a three-dimensional model of a dental arch and digitally generating a base element of the latter. Preliminarily, a fixing position of an orthodontic bracket is digitally provided on each tooth of said three-dimensional model, thus obtaining a treatment positions setup. Thereafter, the method provides for digitally generating a plurality of seats on said base element, each positioned and dimensioned according to the treatment positions setup, obtaining a transfer digital model. Each seat is suitable for receiving one of said plurality of transfer elements to which an orthodontic bracket is fixed.

## Description

### Technical field of the invention

The present invention relates to the field of orthodontics, in particular to methods and devices related to the positioning techniques of orthodontic brackets.

The present invention relates, more particularly, to a modeling method and to a model thus obtained for the positioning of orthodontic brackets in *indirect bonding* procedures.

### Background

The positioning of orthodontic *brackets* is one of the most delicate and complex steps in so-called indirect *bonding* orthodontic procedures, in particular in lingual orthodontics, in fact playing a decisive role for a successful treatment.

These procedures are widely used for example in the treatment of malocclusion, representing today one of the most effective and widespread techniques not only for the treatment of diseases resulting from severe dental crowding, but also for aesthetic treatments such as correction of dental alignment.

The aforementioned indirect *bonding* technique is based on the fixing of a *bracket* on each tooth of a physical model of the patient's dental arch, often according to the skill of the health worker.

Next, a transfer tray is created which takes the mold of the dental arch of the above physical model provided with the *brackets.* The tray is made by covering the dental arch with specific materials that allow retaining the orthodontic brackets. Finally, the tray comprising the *brackets* is applied to the patient's mouth.

In this way, the *brackets* are in the patient's mouth according to the predetermined positions on the mold and, through specific chemical-physical processes, transferred from the tray to the teeth so as to make them adhere to the surface of the latter.

An inaccurate positioning of said brackets can, however, create difficulties in the finishing step and a lengthening of the patient's seat times, due to the need to perform, during the treatment, compensation folds of the orthodontic arch connecting the *brackets* once in the patient's mouth.

To overcome these drawbacks, the most recent techniques involve the use of dedicated software to position, on a three-dimensional virtual model of a dental arch, the *brackets* and subsequently transfer them on a physical model of the latter maintaining all the digitally programmed information.

In particular, with these techniques, an operator is able to choose *brackets* in a virtual library loaded in the software, and move them appropriately into the digital space until the correct position is achieved on the digital reconstruction of the lingual - or buccal - dental surfaces.

Once the positioning of the brackets has been established, through the CAD/CAM technology the so-called *transfer jigs* are then produced, i.e. transfer elements able to support the *brackets* and aimed at positioning the latter on the physical model of the dental arch, as said typically in malocclusion, in accordance with what programmed in digital processing.

Specifically, each tooth is associated with one of said transfer jigs, the manufacture whereof is first obtained digitally, starting from a difference in volumes in the digital space to create a surface complementary to the anatomical one of the corresponding tooth, and then through 3D printing or equivalent technology of the digital transfer jig obtained in this way.

Each transfer jig is therefore applied with the surface complementary to the anatomical surface of the corresponding tooth, thus being able to correctly position the *brackets* on the physical model in malocclusion. The above mentioned transfer tray is then packaged to be applied to the patient's mouth to complete the indirect *bonding* procedure.

This technique allows the use of a "straight wire" orthodontic arch and the reduction of the arch compensation folds due to misalignments of the brackets, thus simplifying the clinical management of the treatment and improving the finishing step. However, it has considerable drawbacks.

A first drawback lies in the fact that the digital operation aimed at creating, for each transfer jig, the surface complementary to the anatomical one of a respective tooth, is an operation that requires a considerable computational effort and is often the cause of errors in a digital environment due to the complex *mesh* discretization of the model that reproduces the dental arch.

Moreover, the complex and extremely irregular surfaces, such as the anatomical teeth surfaces, are difficult to achieve through 3D printing or equivalent techniques, constituting in fact a technological constraint that requires a specific skill of the operator in correcting any undesired results during treatment due to inaccuracies in the positioning of the *brackets.*

Moreover, the entire physical model of the dental arch and the various transfer elements are disposed of after use, the latter being univocally associated with the specific surface of the teeth that make up the reconstructed dental arch of a given patient, binding the health worker to the creation, from time to time, of specific transfer elements, with evident limits and inefficiencies in the production cycle.

### Brief description of the invention

The technical problem posed and solved by the present invention is therefore that of overcoming the problems described above, and this is achieved through an orthodontic modeling method to allow the positioning of orthodontic brackets as defined in claim 1.

On the basis of another aspect, the invention relates to a transfer model and a transfer element to allow the positioning of the orthodontic brackets as defined respectively in claims 12 and 17.

The modeling method, the model and the transfer element according to the present invention allow an accurate positioning of the orthodontic brackets and the reduction of the computational effort necessary to achieve such positioning.

It is a further object of the present invention to provide a modeling method for the positioning of orthodontic brackets which allows reducing the manufacturing costs thereof and simplifying the management of orthodontic treatments.

Further features of the present invention are defined in the corresponding dependent claims.

In general terms, the present invention relates to an orthodontic modeling method which allows orthodontic brackets to be positioned on the basis of the use of a plurality of transfer elements.

This method involves providing a three-dimensional model of a dental arch and digitally generating a base element of the latter. Preliminarily, a fixing position of an orthodontic bracket is digitally provided on each tooth of said three-dimensional model, thus obtaining a treatment positions setup.

Thereafter, the method provides for digitally generating a plurality of seats on said base element, each positioned and dimensioned according to the treatment positions setup, obtaining a transfer digital model whereof a physical model is then generated.

Each seat is suitable for receiving one of said plurality of transfer elements to which an orthodontic bracket is fixed.

Advantageously, according to the method of the present invention, therefore, said plurality of transfer elements is therefore provided, to which a respective orthodontic bracket is fixed.

Finally, each transfer element is inserted in a corresponding seat of the physical model in such a way as to obtain the positioning of said orthodontic brackets according to the treatment positions setup.

This solution allows improving the accuracy of the positioning of the orthodontic brackets, as it reduces problems in the digital procedure related to the complexity of the operations based on the involvement of the anatomical surface of the tooth.

This advantage is achieved by virtue of the fact that the transfer elements which support the dental brackets engage seats formed on the base element of the dental arch and need no longer be shaped according to substantially irregular surfaces, such as those of the teeth.

As mentioned above, according to another aspect of the invention, the above technical problem is solved by a transfer model and a transfer element, which cooperate to obtain the positioning of the orthodontic brackets.

The transfer model comprises a three-dimensional reconstruction of the dental arch and of said base element, wherein the latter is provided with a volume that develops in a region opposite to a region that protrudes from an occlusal plane of the dental arch. Said seats are formed in such a volume according to a pre-determined information related to a fixing position of an orthodontic bracket to a respective tooth.

The transfer member comprises a main body, provided with two ends, wherein a first end carries a housing configured to receive, in use, an orthodontic bracket, and the second end is provided with an engagement portion configured to engage a respective one of said seats of the base element of the transfer model.

Advantageously, moreover, the method according to the present invention provides for the possibility of using a transfer model which corresponds to a dental arch in the condition of malocclusion or, preferably, in the condition of treatment end of a patient's mouth.

The invention therefore allows reducing the costs associated with the manufacture of devices for positioning orthodontic brackets, being able in fact to use the same transfer elements in association with different transfer models, or in the various treatment steps.

In fact, since the information associated with the position of the orthodontic brackets is transferred and translated as a seat position and geometry configuration within the transfer model, the transfer element is released from the role of carrier element of the personalized information related to a specific dental arch.

Furthermore, advantageously it is possible to immediately position each orthodontic bracket on the respective dental element of the physical model of the transfer model, as mounting can be performed on a physical model which corresponds to a condition of treatment end with aligned teeth.

In this sense, even in the case of severe crowding, it is no longer necessary to create multiple versions of the physical model according to the evolution of the position of the teeth during the orthodontic treatment, thus obtaining a reduction in terms of time, costs and complexity of managing the clinical case.

Furthermore, the method and the model according to the present invention contemplates the possibility of creating and using an aligner for the end of orthodontic treatment finishes, thus guaranteeing a 100% faithful occlusion with respect to what is digitally programmed.

In fact, due to the fact that the model on which the orthodontic brackets are mounted can also be the one that simulates the end of treatment configuration, it is possible to manufacture one or more aligners on the same model, to be used at the end of the treatment to compensate and correct what may have been left unfinished by the treatment itself.

Further advantages, together with the features and methods of use of the present invention, will be apparent from the following detailed description of preferred embodiments thereof, made by way of a non-limiting example.

### Brief description of the figures

Reference will be made to the drawings shown in the accompanying figures, in which:
- figures 1A and 1B show a top view of a reconstruction of a dental arch, without and with a gingival surface, respectively;
- figure 1C shows a top view of the dental reconstruction in figure 1A with the positioning of orthodontic brackets;
- Figure 2 shows two overall views of the reconstruction of the dental arch in figure 1B provided with an embodiment of a first detail - the base element - of a transfer model for positioning orthodontic brackets according to the present invention;
- Figure 3 shows a step of the modeling method according to the present invention;
- figures 4 and 5 show a preferred embodiment of a first construction detail - the seats - of an embodiment of the base element of the transfer model, and a preferred embodiment of the transfer model according to the present invention, respectively;
- figures 6A and 6B show an enlarged detail in different views of a transfer element according to the present invention in condition mounted in the transfer model shown in figure 5;
- figures 7A, 7B and 7C show a sequence of steps of the assembly in a first operating condition of a transfer element on a transfer model according to the present invention;
- figures 8A and 8B show different views of an example of assembly in a second operating condition of a transfer element on a transfer model according to the present invention;
- figures 9A and 9B show different views of an example of assembly in a third operating condition of a transfer element on a transfer model according to the present invention;
- figures 10A, 10B and 10C show a side view, a rear view and an overall view, respectively, of a preferred embodiment of a transfer element according to the present invention.

### Detailed description of embodiments of the invention

The present invention is described in detail below with reference to the above figures.

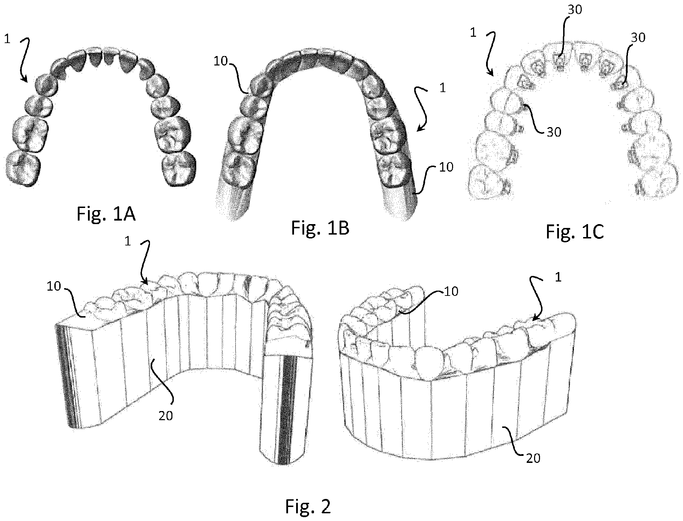

With initial reference to figures 1A and 1B, a top view of a dental arch 1 is shown, which dental arch is designed to receive orthodontic brackets according to a transfer method according to the present invention.

This method finds a preferred field of application in the so-called orthodontic techniques of *indirect bonding,* specifically in those techniques which involve the preliminary planning of the position of the orthodontic brackets on a virtual reconstructed model of the dental arch and subsequently, through specific procedures and appropriate devices, the transfer of the latter on the patient's teeth, at the programmed position and thus allow the orthodontic treatment.

In particular, the dental arch 1 in figure 1A is a three-dimensional reconstruction of a dental arch of a patient's mouth. While the lower arch is always shown in the figures, the method described herein may also provide for the use of a reconstruction of an upper dental arch, or both.

Moreover, the dental arch 1 represented in the figures relates to a three-dimensional model in condition of end of orthodontic treatment, or to the final condition in which the teeth are arranged according to the desired position.

This condition is preferably the condition referred to by the method according to the present invention, although also with reference to malocclusion conditions this method is applied.

Such a reconstruction may be digitally acquired through a scan of a mold of the dental arch (in the case of an arch in malocclusion), or alternatively it may be received or acquired through computer software.

As known to the man skilled in the art, such software is a CAD/CAM software, implemented by algorithms able to recreate a three-dimensional virtual space within which it is possible to manipulate and/or modify the reconstructions acquired to create virtual models and subsequently realize physical models of said virtual models.

Therefore, starting from the three-dimensional model 1 illustrated in figure 1A provided with teeth positioned in the final treatment condition, a processing unit, through an algorithm, digitally generates a mesio-distal surface 10 between each pair of dental elements, in order to simulate gums on such a model, as seen in figure 1B.

A base element 20 of this three-dimensional model 1 is then digitally generated and, with reference to the example illustrated in figure 2, it is appreciable that such a base element 20 is, in a preferred embodiment, a "hoof" of the latter, that is, a base of the dental arch 1 which develops following the path of the latter.

Moreover, this base element 20 is algorithmically generated from mathematically optimized surfaces, that is, generated taking into account, for example, degree, number of control points, u-v subdivision, to prepare the latter for Boolean difference operations, or subtracting volumes in CAD environment, which will be described in more detail below.

In different embodiments not shown, such a base element 20 may of course have geometries which for example occupy the lingual or palatal area of the dental arch 1, or other geometries.

In general, therefore, the base element 20 comprises a volume that develops in a region opposite to a region that protrudes from an occlusal plane of the dental arch 1.

Referring now to figures 1C, 3, 6a and 6b, prior to the generation of the base element 20 of the dental arch 1, a fixing position of an orthodontic bracket 30 is digitally provided on each tooth of the three-dimensional model 1, thus obtaining a treatment positions setup (TS).

The optimal positions of the orthodontic brackets 30 depend, for example, on the type of treatment to be performed or on the type of orthodontic brackets selected, in any case according to information processed and provided by specific orthodontic software.

This position setup (TS) can be located at the inner or lingual face of the dental arch 1 (as illustrated in the above figures) or, in a manner completely equivalent to the purposes of the present invention, on the outer or buccal face of the latter.

The information contained in the treatment positions setup (TS) provided, which can be associated overall with a position information of each orthodontic bracket 30 to a respective tooth, is transferred to the base element 20 of the three-dimensional model 1.

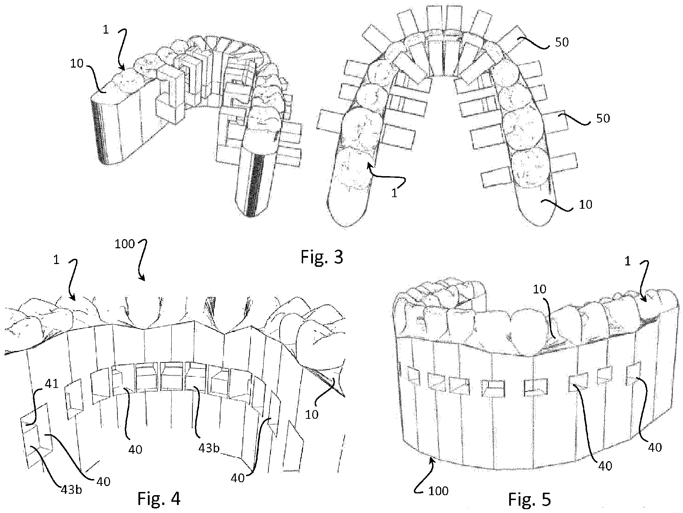

More in detail, a plurality of seats 40 are generated algorithmically on said base element 20, positioned and dimensioned each according to the information contained in the treatment positions setup (TS), obtaining a transfer model 100, as shown in figure 4 and 5.

Each seat of said plurality of seats 40 is associated with a respective tooth of the three-dimensional model of the dental arch 1 and the position and geometry of each seat 40 is obtained according to the pre-determined information on said model 1 related to the fixing position of the orthodontic bracket 30 to a respective tooth.

At the determined fixing positions, then, a respective orthodontic bracket 30 is associated, each of which will subsequently be positioned on a physical model of the previously obtained transfer model 100.

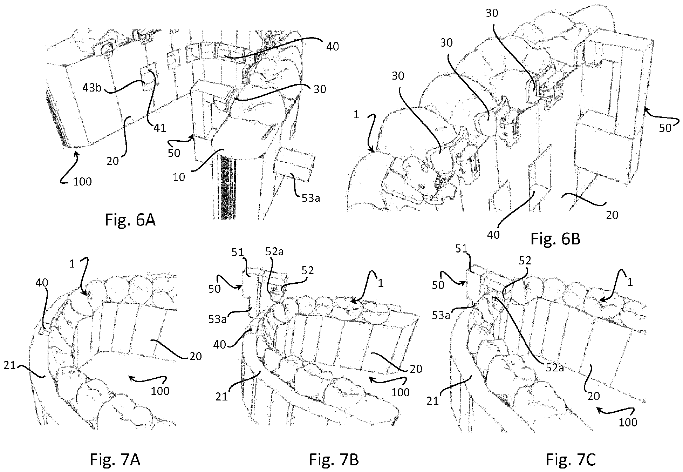

Moreover, and again with reference to figures 6a and 6b, each seat 40 is adapted to receive a respective transfer element 50, or plug, the latter intended to support a relative orthodontic bracket 30 in order to be able to fix it in the correct position on the physical model.

In particular, each transfer element 50 has a main body 51 provided with a first end 52 and a second end 53.

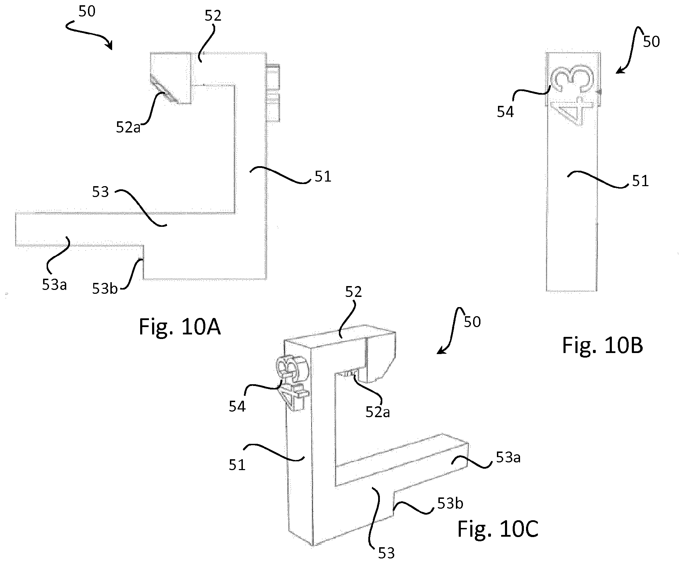

In a preferred embodiment of the transfer element 50, as seen in figures 10a, 10b and 10c, the first end 52 carries a housing 52a configured to receive, in use, an orthodontic bracket 30, and the second end 53 is instead provided with an engagement portion 53a configured to engage the respective seat 40 of the base element 20 of the transfer model 100.

In this example, the main body 51 is shaped with a substantially "C" profile, wherein the free ends of said "C" profile are provided with respectively said housing 52a and said engagement portion 53a.

The main body 51 has, in this example, a quadrilateral geometry section transversal to its development direction. However, other sections are possible, such as generally polygonal or even circular sections.

In any case, this section is made in such a way as to obtain an ergonomic profile, to allow easy handling of the transfer element 50, and of reduced size, to allow easy removal, for example, of the excesses of all the materials necessary for fixing the orthodontic brackets 30 to the dental elements of the physical model obtained from the transfer model 100.

Advantageously, the main body 51 of each transfer element 50 carries an identification code, indicated in the figures with reference 54, for example numerical or alphanumeric, associated with the type of orthodontic bracket it supports and/or to the type of tooth on which the latter must be fixed.

The housing 52a of the first end 52 of each transfer element 50, in fact, is configured to receive orthodontic brackets 30 of different types, for example configured to receive lingual orthodontic brackets known by the trade name ALIAS (Ormco®).

It will be apparent that, moreover, the engagement portion 53a of the second end 53 is configured in such a way as to engage seats 40 of different transfer models 100 related to different treatment positions setup (TS) of the orthodontic brackets 30.

Such an engagement portion 53a, with particular reference to the examples shown in figures 4, 10A and 10C, is shaped like a step, i.e. in such a way as to provide an abutment surface 53b which, by contacting a corresponding stop surface 43b present in a respective seat 40 on the base element 20, allows blocking at least the sliding of the transfer element 50 within the latter.

In practice, the volume of the engagement portion 53a of the transfer element 50 corresponds to the volume which is algorithmically subtracted from the base element 20 according to the pre-determined treatment positions setup (TS), to generate one of said plurality of seats 40.

In other words, each seat 40 has a guide 41 shaped to removably receive the engagement portion 53a of a corresponding transfer member 50.

The engagement portion 53a and the guide 41 are provided with surfaces of complementary geometries which cooperate with each other by blocking the sliding of the transfer element 50.

In this way, due to the transfer element 50, it is possible to approach the orthodontic bracket 30 to the associated tooth according to the information contained in the pre-determined treatment positions setup (TS).

Likewise, the location of the seat 40 on the base element 20 with respect to a reference system integral with the tooth allows completing the transfer on the latter of the information on the correct position of the orthodontic bracket 30.

In this way, advantageously, by keeping the geometry with which the seats 40 are generated on the base element 20 unchanged, for example for different dental arches or treatment positions setup (TS), it is possible to re-use a same set of transfer elements 50 for a variety of different orthodontic treatments for the same type of brackets, even for different patients.

In this sense, the information on the approach of the orthodontic bracket 30 to the tooth is expressed by the depth of the step within a respective seat 40 case by case.

It will be appreciated that, with this technique, considerable advantages are obtained, in particular by being able to simplify and improve the accuracy of the positioning of the orthodontic brackets, as in fact the problems encountered in the digital procedure specifically related to the complexity of operations based on the involvement of the anatomical surface of the teeth are bypassed.

Therefore, the transfer elements 50 this far described and used according to the method according to the present invention, are standardized elements that may already be available to an operator, as a physical model used for example in previous treatments, or alternatively be generated digitally contextually to the generation of a specific transfer model 100.

In the latter case, once the transfer model 100 and the plurality of transfer elements 50 are generated, a physical model of both is obtained.

In order to generate said physical models, the method according to the present invention preferably uses rapid prototyping techniques, such as for example 3D printing, in association with the typical materials suitable for orthodontic applications, and per se known.

Once the physical models have been generated, by inserting the transfer elements 50, the brackets 30 are fixed to the dental arch of the physical model, through specific techniques and adhesives known to the man skilled in the art. Subsequently, the transfer elements 50 are extracted, which are now lacking the brackets 30 and a transfer tray is created to transfer said brackets to the patient's mouth.

As known, the transfer tray is made of materials for example with a silicone base, in any case with properties such as to adapt perfectly to the morphology of the dental arch on which the orthodontic bracket is fixed.

The tray is therefore made of materials such as to allow the adhesion and the retention of one or more brackets 30 and, subsequently, to be applied to the patient's dental arch, in order to obtain the fixing of the brackets to the teeth of the latter.

Returning to the transfer elements 50, they can also be inserted into the seats 40 of the base element 20 according to different modes.

With reference to the examples illustrated in figures 6a and 6b, the guides 41 of the seats 40 and the engagement portions 53a of the transfer elements 50 can cooperate in such a way that the insertion of the latter takes place along a direction substantially parallel to an occlusal plane of the dental arch 1.

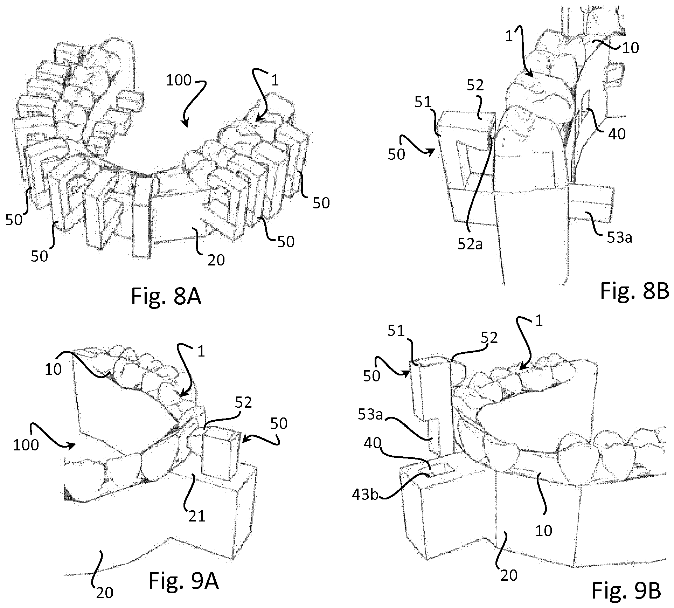

In this example, the application of the orthodontic brackets is lingual, but likewise, as illustrated in figures 8a and 8b, the aforesaid method of insertion along a direction parallel to the occlusal plane of the transfer elements 50 may allow the application of the brackets on the vestibular side of the dental arch 1.

In the examples shown in figures 7A, 7B and 7C instead, the base element 20 is shaped in such a way that the guides 41 of the seats 40 thereof and the engagement portions 53a of the transfer elements 50 can cooperate in such a way that the insertion of the latter takes place along a direction substantially orthogonal to the occlusal plane of the dental arch 1.

In this case, an edge 21 of the base element 20 is visible, which follows the path of the dental arch along the buccal surface of the teeth, and allows a lingual application of the orthodontic brackets 30.

In this embodiment example, the stop surface 43b which contacts the abutment surface 53b of the engagement portion 53a of the transfer member 50 is in fact formed by the edge region surrounding the opening of the seat 40.

With reference to figures 9a and 9b, an example of a buccal application of the orthodontic brackets 30 is shown, using said edge 21 to insert the transfer elements along a direction orthogonal to the occlusal plane of the dental arch 1.

The present invention has been described so far with reference to preferred embodiments thereof. It is to be understood that each of the technical solutions implemented in the preferred embodiments, described herein by way of example, may advantageously be combined differently to implement other embodiments which belong to the same inventive concept and all still falling within the protection scope of the claims set forth below.

## Claims

1. Orthodontic modeling method to allow the positioning of orthodontic brackets (30) based on the use of a plurality of transfer elements (50), which method comprises the steps of:
a) providing a three-dimensional digital model (1) of a dental arch;
b) digitally providing on each tooth of the three-dimensional model (1) a fixing position of a respective orthodontic bracket (30), obtaining a treatment positions setup (TS);
c) digitally generating through a processing unit a base element (20) of the three-dimensional model (1);
d) digitally generating a plurality of seats (40) on said base element (20) positioned and dimensioned in accordance with the treatment positions setup (TS), obtaining a transfer digital model (100), wherein each of said seats (40) is suitable to receive one of said plurality of transfer elements (50) to which an orthodontic bracket (30) is fixed.

2. Modeling method according to claim 1, further comprising the steps of:
e) generating a physical model of the transfer digital model (100);
f) providing said plurality of transfer elements (50), each transfer element being configured to engage a corresponding seat of said plurality of seats (40);
g) fixing to each transfer element (50) a respective orthodontic bracket (30);
h) inserting each transfer element (50) in a corresponding seat (40) of the physical model in such a way as to obtain the positioning of orthodontic brackets (30) according to the treatment positions setup (TS).

3. Modeling method according to claim 2, wherein said step f) comprises:
- digitally generating one or more of said plurality of transfer elements (50); and
- generating a physical model of said one or more of said plurality of transfer elements (50).

4. Modeling method according to any one of the preceding claims, wherein said base element (20) comprises a volume that develops in a region opposite to a region that protrudes from an occlusal plane of the dental arch.

5. Modeling method according to any one of the preceding claims, wherein said base element (20) is in the form of a plinth of the dental arch that develops following the path of the latter, in particular a hoof.

6. Modeling method according to any one of the preceding claims, wherein said plurality of transfer elements (50) are standardized and reusable elements in combination with different setups of treatment positions (TS).

7. Modeling method according to any one of the preceding claims, wherein each of said plurality of seats (40) has a guide (41) shaped to receive in a removable manner an engagement portion (53a) of a corresponding transfer element (50), wherein said engagement portion (53a) and said guide (41) are provided with surfaces having geometries complementary to each other.

8. Modeling method according to claim 7, wherein said guide (41) and said engagement portion (53a) cooperate in such a way that the insertion of each transfer element (50) occurs along a substantially perpendicular or parallel direction to an occlusal plane of the dental arch.

9. Modeling method according to any one of the preceding claims, wherein said treatment positions setup (TS) is localized either in correspondence of the inner face, or lingual, or on the outer face, or buccal, of said dental arch.

10. Modeling method according to claim 2, further comprising a step j) of generating a transfer tray on said physical model configured in such a way as to adhere and retain one or more of said orthodontic brackets (30), said transfer tray being intended to be applied to the dental arch of a patient.

11. Modeling method according to claim 2, wherein said step e) is obtained through three-dimensional printing processes or equivalent processes.

12. Modeling method according to any one of the preceding claims, wherein said three-dimensional model (1) corresponds to a dental arch of the mouth of a patient in a malocclusion or final treatment condition.

13. Transfer model (100) for positioning orthodontic brackets (30) for use in a method according to any of claims 1 to 12, which transfer model (100) comprises:
- a three-dimensional reproduction (1) of a dental arch,
- a base element (20) provided with a plurality of seats (40), said base element (20) comprising a volume that develops in a region opposite to a region that protrudes from an occlusal plane of the dental arch,
wherein each seat of said plurality of seats (40) is associated with a tooth of said dental arch and is formed according to a pre-determined information related to a fixing position of an orthodontic bracket (30) to a respective tooth.

14. Transfer model (100) according to claim 13, wherein each of said plurality of seats (40) has a guide (41) shaped to receive in use a removable engagement portion (53a) of a corresponding transfer element (50), wherein the engagement portion (53a) and said guide (41) are provided with surfaces having geometries complementary to each other.

15. Transfer model (100) according to claim 13 or 14, wherein said volume of the base element (20) comprises one or more surfaces configured in such a way as to obtain a plinth of the dental arch that develops following the path of the latter.

16. Transfer model (100) according to any one of claims from 13to 15, wherein each of said plurality of seats (40) is configured in such a way that an insertion in it of a transfer element (50) occurs along a direction substantially perpendicular or parallel to the occlusal plane of the dental arch.

17. Transfer element (50) for use in association with a transfer model (100) in accordance with any one of claims from 12 to 16, comprising a main body (51) provided with a first (52) and a second end (53), wherein
said first end (52) has a housing (52a) configured to receive, in use, an orthodontic bracket (30),
said second end (53) is provided with an engagement portion (53a) configured to engage in use a corresponding one of said plurality of seats (40) of the base element (20) of said transfer model (100).

18. Transfer element (50) according to claim 17, wherein said engagement portion (53a) is configured in such a way as to engage in use seats of different transfer models (100) relative to different setups of treatment positions (TS) of orthodontic brackets (30).

19. Transfer element (50) according to claim 17 or 18, wherein said housing (52a) is configured to receive orthodontic brackets (30) of different type.

20. Transfer element (50) according to any one of claims from 17 to 19, wherein said main body (51) is shaped with a substantially "C" profile and wherein the free ends of said profile are provided with respectively said housing (52a) and said engagement profile (53a).

21. Transfer element (50) according to any one of claims from 17 to 21, wherein said main body (51) has an identification code (54) associated to the type of orthodontic bracket (30) and/or the type of tooth.

22. Transfer system for positioning orthodontic brackets comprising a transfer model (100) according to any one of claims from 13 to 16, and a transfer element (50) according to any one of claims from 17 to 21.

23. Method of orthodontic treatment performed through the use of a transfer model (100) according to any one of claims from 13 to 16 in association with a plurality of transfer elements (50) according to any one of claims from 17 to 21 and in accordance to a modeling method according to any one of claims from 1 to 12.

24. Computer software comprising code apt to implement a modeling method according to any one of claims from 1 to 12 when running on a computer.
